# EUROPEAN PATENT APPLICATION

(11) **EP 4 451 605 A1**
(43) Date of publication of application: **23.10.2024**
(21) Application number: 23168897.9
(22) Date of filing: 20.04.2023
(51) Int. Cl.: H04L 9/08, H04L 9/32, G06Q 20/40

(54) **QUANTUM-DIGITAL AUTHORIZATION METHOD FOR AUTHORIZING A DIGITAL TRANSACTION WITH A SENDER AND A PROVIDER**

(71) Applicant: Universität Wien, 1010 Vienna (AT)
(72) Inventor: BOZZIO, Mathieu, 1090 Wien (AT); GUGGEMOS, Tobias, 1090 Wien (AT); SZTATECSNY, Esther, 1090 Wien (AT); SCHIANSKY, Peter, 1090 Wien (AT); WALTHER, Philip, 1090 Wien (AT)
(74) Representative: SONN Patentanwälte GmbH & Co KG

(57) **Abstract**

Quantum-digital authorization method for authorizing a digital transaction with a sender (2) and a provider (1), comprising the steps:
- preparing a quantum token **|*P*〉** (16) by the provider (1);
- transmitting the quantum token **|*P*〉** (16) to the sender (2);
- calculating a first sequence of measurement operators by the sender (2), whereas the first sequence is an output of a predefined function f(C,M) (37) of a secret token C (6) and a public receiver token M (7);
- generating a first bitstring B (22) of measured bits by measuring the received quantum token **|*P*〉** (16);
- determining an expected bitstring B' (26) with expected bits;
- responsive to verifying that the expected bits of the expected bitstring B' (26) agree to corresponding measured bits of the first bitstring B (22) except for up to a predefined maximum amount of deviations, confirming the digital transaction by the provider (1).

## Description

The disclosure concerns a method for quantum-digital authorization method for authorizing a digital transaction, a provider comprising means for preparing a quantum token and a sender comprising means for receiving a quantum token.

The project leading to this application has received funding from the European Union's Horizon 2020 research and innovation programme under grant agreement No 820474.

The project leading to this application has received funding from the European Union's Horizon 2020 research and innovation programme under grant agreement No 899368.

Digital contactless transactions have replaced physical transactions, such as payments with banknotes, in many aspects of our daily lives. Similar to physical banknotes, such digital transactions are easy to use, unique, tamper-resistant, and untraceable, but additionally have to withstand attackers and data breaches in the digital world. Current technology substitutes sensitive data of customers by randomized tokens, and secures the uniqueness of each digital purchase with a cryptographic function, often referred to as cryptogram. Nonetheless, computationally powerful attacks violate the security of these functions. Especially quantum computing might pose a severe threat to the integrity of current implementations. Quantum technology, on the other hand, has the unique potential to guarantee payment protection even in the presence of infinite computational power and quantum computing.

Typically, digital payments from a client to a merchant are authorized by a provider, such as a bank for example. The client initially sets up an account with the provider via a secure communication channel. Through this initial step, the client is assigned a unique identification token C', which is stored securely by both the provider and the client. When the client wishes to purchase goods or services from a given merchant, it must be ensured that malicious parties, including untrusted merchants, cannot use the digital assets of the client. Therefore, the client receives a one-time payment token P' from the provider, which is used to compute a cryptogram. The cryptogram is an output of a function of the secret token C', the merchant's public ID M', and the one-time payment token P'. This cryptogram κ(C', M', P') is forwarded to the merchant, who then sends it to the provider for verification. The provider can verify a signature and uniqueness of the cryptogram, since the provider is aware of all three inputs C', M' and P'. Typically, the cryptogram is the output of a cryptographic hash function or encryption function that is computationally secure. However, this allows a malicious party with sufficient computational power to run through all input combinations of C', P' and M' until a collision is found. In that case, the client's ID and payment data are compromised, which is a significant drawback of current implementations and poses a significant risk to clients. Especially once quantum computing reaches a more mature state and is available for a broader public, current digital implementations are prone to attacks.

Various schemes have been proposed that are robust against computationally powerful attackers by using quantum states. Due to the general rules of quantum mechanics and specifically the non-cloning theorem, a quantum state can only be measured once and cannot be reproduced. For example, a quantum state can be encoded onto a photon. A measurement may for example yield the expectation value of the quantum state with respect to a certain operator. For example, the quantum state could relate to a polarization and the operator may be realized by a polarizer and a photon detector, or a polarising beam-splitter and two photon detectors.

For example, according to US 10 790 972 B2 a token issuer (i.e., a bank) B can generate a random composite quantum state |Ψ〉 at point P in space and time. This state is then sent to the token acquirer A. A performs a measurement by applying a measurement operator Mₖ on |Ψ〉, where Mₖ corresponds to the future point Qₖ in space and time where she wants to redeem the token. Then, at point Qₖ party A returns the measurement string to party B, who can check its statistical plausibility. The parties A and B pre-agree on a set of measurement strings Mₖ, each of which will give a corresponding string of outcomes that can be valid only at a single point. The random composite quantum state |Ψ〉works approximately as the one-time payment token P' from the provider in the classical scheme.

Kent, Adrian, et al. "Practical quantum tokens without quantum memories and experimental tests." npj Quantum Information 8.1 (2022): 28 shows quantum tokens based on quantum states. In the token scheme, Bob (the bank) and Alice (the acquirer) agree on spacetime regions Qi where a token can be presented by Alice to Bob. Bob has trusted agents B and Bi controlling secure laboratories, and Alice has trusted agents A and Ai controlling secure laboratories. The token schemes comprise two main stages. Stage I includes the quantum communication between Bob and Alice. B generates quantum states randomly from a predetermined set and gives these to A. A measures the received states in bases from a predetermined set. Stage II comprises only classical processing and classical communication among agents of Bob and Alice. The token schemes conclude by Alice giving a classical message x (the token) to Bob at her chosen presentation point Q_{b} and Bob validating the token at Q_{b} if x satisfies a mathematical condition.

A disadvantage of known methods based on quantum states is that the bank and the client need to securely agree in advance on a full set of possible merchants with which the client may interact together with the corresponding measurement strings.

It is therefore an object of the invention to eliminate or at least alleviate at least some of the disadvantages of the prior art. In particular, it is an object of the invention to provide a quantum-digital authorization method for authorizing a digital transaction with increased privacy for the client and increased flexibility.

This object is achieved by a quantum-digital authorization method for authorizing a digital transaction with a sender and a provider, whereas the sender and the provider have a secret token C associated with the sender, comprising the steps:
- preparing a quantum token **|*P*〉** by the provider, whereas the quantum token **|*P*〉** comprises a series of quantum states encoded onto qubits, whereas the provider stores a classical description of the prepared quantum token **|*P*〉;**
- transmitting the quantum token **|*P*〉** from the provider to the sender;
- calculating a first sequence of measurement operators by the sender, whereas the first sequence is an output (or result) of a predefined function f(C,M) of the secret token C and a public receiver token M, whereas the receiver token M is associated with the receiver, whereas the first sequence of measurement operators is based on a set of predefined measurement operators;
- generating a first bitstring B of measured bits by measuring the received quantum token **|*P*〉** according to the calculated sequence of measurement operators by the sender;
- receiving the generated first bitstring B and the receiver token M by the provider;
- computing a second sequence of measurement operators by the provider, whereas the second sequence is an output (or result) of the predefined function f(C,M) of the secret token C and the received receiver token M, whereas the second sequence of measurement operators is based on the set of predefined measurement operators;
- determining an expected bitstring B' with expected bits based on the computed second sequence of measurement operators and the stored classical description of the quantum token **|*P*〉;**
- responsive to verifying that the expected bits of the expected bitstring B' agree to corresponding measured bits of the first bitstring B except for up to predefined maximum amount of deviations, confirming the digital transaction by the provider.

The method involves a sender, a provider, and a receiver. The provider may be, for example, a bank or any trusted party. The sender may be a private person or any legal entity, for example. The sender may intend to transfer a digital asset to the receiver in terms of a digital transaction. For example, the receiver may be a merchant and the sender may intend to buy a service or a good from the merchant and intends to pay by means of the digital asset. The digital asset may be digital money, such as an amount of Euro or US Dollar, for example. The digital transaction may be the (digital) signing of a document, for example. The digital transaction needs to be authorized by the sender and confirmed by the provider in order to take place.

The sender and the provider have a secret token C associated with the sender. The sender and the provider have agreed upon the secret token beforehand in a way, that the secret token C is unknown to any third party and is securely stored by only the sender and the provider. The secret token may be a string of bits, for example.

In an initial step, the provider is preparing a quantum token **|*P*〉.** The quantum token comprises a series of quantum states encoded onto qubits, i.e. two-state quantum mechanical systems. Preparing the quantum token **|*P*〉** may comprise producing pairs of entangled photons, for example. The quantum token **|*P*〉** may comprise photons, electrons and/or atoms, for example. For example, a quantum state may be encoded in terms of a polarization or phase of a photon, a spin of an electron and/or a state of an atom or by time-encoding. The provider stores a classical description of the prepared quantum token **|*P*〉.** Since the provider prepares the quantum token **|*P*〉,** the classical description of the quantum token **|*P*〉** is known to the provider without any physical measurement of the quantum token **|*P*〉.** The provider then transmits the quantum token **|*P*〉** to the sender. The sender consequently receives the quantum token **|*P*〉** from the provider. In case a malicious third party would intercept the quantum token **|*P*〉,** the malicious third party would be able to perform a measurement of the quantum token **|*P*〉,** which, however, would not yield the full (classical) description of the quantum token **|*P*〉.** Once a measurement has been performed, the quantum token **|*P*〉** is at least altered and thus destroyed. The malicious third party is unable to duplicate the quantum token **|*P*〉** due to the non-cloning theorem.

The sender calculates a first sequence of measurement operators whereas the first sequence is an output of a predefined function f(C,M) of the secret token C and a public receiver token M. The receiver token M is associated with the receiver. For example, the receiver token M may be a public merchant-identification of the receiver. The first sequence of measurement operators is based on a set of predefined measurement operators. The set of predefined measurement operators may comprise at least two measurement operators. For example, a first measurement operator A may relate to a linear polarization of a photon in a first direction, and a second measurement operator B may relate to a linear polarization of a photon in a second direction. The first direction may be non-orthogonal to the second direction. The first direction is different from the second direction. The first sequence of measurement operators is an ordered sequence of the predefined measurement operators. For example, the first sequence may comprise the first measurement operator A four times and the second measurement operator B three times in any one specific order. The first sequence is determined by the output of the predefined function. For example, the output (or the result) of the predefined function may be a string of characters, whereas each character corresponds to a measurement operator. For example, the output of the predefined function f(C,M) may be "0001011", whereas "0" may be interpreted as the first measurement operator A and "1" may be interpreted as the second measurement operator B. Therefore "0001011" may be interpreted as a first sequence may be the ordered sequence of measurement operators (A; A; A; B; A; B; B). The predefined function f(C,M) may be, for example, a hash function. The output of the hash function depends strongly on the input, such that an incremental change in the input yields a significant change in the output. Therefore, a first sequence based on f(C,M) vastly differs form a sequence based on f(C,M'), whereas M' differs in only one bit from M. This property enhances the security of the disclosed method.

Consequently, the sender generates a first bitstring B of measured bits by measuring the received quantum token **|*P*〉** according to the calculated first sequence of measurement operators. For example, the quantum token **|*P*〉** may comprise an ordered sequence of a total of m qubits encoded onto quantum states, whereas m is a positive integer. The first sequence therefore comprises an ordered sequence of m predefined measurement operators. A first qubit encoded onto a first quantum state of the quantum token **|*P*〉** is then measured according to a first measurement operator of the first sequence of measurement operators. The measurement may yield, for example, either a first signal or a second signal, and can thus be interpreted as a measured bit. All further qubits encoded onto the further quantum states are measured according to the corresponding measurement operator as defined by the calculated first sequence. The first bitstring B comprises an ordered sequence of measurement results in terms of measured bits.

In a next step, the provider receives the generated first bitstring B and the receiver token M. The provider may receive the generated first bitstring B and the receiver token M from the sender, for example. This generated first bitstring B may be referred to as a cryptogram. The first bitstring B and the receiver token M may be transmitted via a classical channel, which may be a secure channel or a non-secure channel. The security of the classical channel is not critical for the disclosed method, as the generated first bitstring B and the receiver token M are insufficient to compromise any of the data of the sender and insufficient to authorize a digital transaction, such as a transfer of any digital assets of the sender or signing of a document without permission of the sender.

Furthermore, the provider computes a second sequence of measurement operators, whereas the second sequence is an output of the predefined function f(C,M) of the secret token C and the received receiver token M, whereas the second sequence of measurement operators is based on the set of predefined measurement operators. Since the provider has access to the secret token C, has received the receiver token M and also knows the predefined function f(C,M) as well as the set of predefined measurement operators, the second sequence of measurement operators is equal to the first sequence of measurement operators. The terms "computing" and "calculating" are used synonymously in this disclosure. By means of the predefined function f(C,M), the provider and the sender do not have to agree on a set of possible receivers and a corresponding sequence of measurement operators beforehand. It is sufficient that the sender and the provider agree on the function f(C,M) that provides a sequence of predefined measurement operators for any input of the secret sender token C and the receiver token M.

The provider then determines an expected bitstring B' with expected bits based on the computed second sequence of measurement operators and the stored classical description of the quantum token **|*P*〉.** The provider may, for example, calculate a first expectation value of the first qubit encoded onto the first quantum state with respect to a first measurement operator of the second sequence of measurement operators. The first expectation value may have a value in the interval between zero and one. For example, the first expectation value may be rounded to generate a first expected bit of the expected bitstring B'. Further expected bits are calculated analogously. Alternatively, the rounding may be omitted and the expected bitstring B' may comprise expectation values between zero and one. Optionally, any bits with expectation values other than zero and one, i.e., all quantum states that are not measured in the basis in which they are prepared in, may be omitted, and are therefore not expected bits and are consequently not compared to the measured bits of the measured first bitstring B. Alternatively, bits may be omitted based on any other criteria, such as an order of the bits, for example. The number of expected bits of the expected bitstring B' may be smaller than the number of quantum states of the quantum token **|*P*〉** and/or the number of measured bits of the first bitstring B. The expected bitstring B' may comprise a number of bits which is equal to the number of quantum states of the quantum token **|*P*〉.** The measured first bitstring B may comprise a label (e.g., a time tag) for each measured bit. The time tag may show the time at which the measured bit of the measured first bitstring B has been measured. The time tag may be used by the provider to match a measured bit of the measured first bitstring B to an expected bit of the expected bitstring B' .

Responsive to verifying that the expected bits of the expected bitstring B' agree to corresponding measured bits of the first bitstring B except for up to a predefined maximum amount of deviations, the provider confirms the digital transaction. Each expected bit of the expected bitstring B' may be compared to a corresponding measured bit of the first bitstring B. The label of each expected bit may indicate, which measured bit of the first bitstring B is to be compared against the respective expected bit of the expected bitstring B'. The predefined maximum amount of deviations may for example be an upper limit of missing measured bits of the measured first bitstring B and measured bits that do not agree with the respective corresponding expected bit of the expected bitstring.

Optionally, the predefined function f(C,M) is an information-theoretically secure cryptographic function of the secret token C and the public receiver token M. An information-theoretically secure cryptographic function is secure against attacks with unlimited computing resources and time. Collisions are not fundamentally excluded but are highly unlikely when using an information-theoretically secure cryptographic function. Therefore, an attacker would be unable to find a collision. Thus, the security of the method can be further enhanced.

Optionally, the predefined maximum amount of deviations is less than 50% of a total number of expected bits, such that more than 50% of the expected bits of the expected bitstring B' are equal to a corresponding fraction of the measured bits of the first bitstring B. For example, the predefined maximum amount of deviations is less than 25%, specifically less than 10%, in particular less than 5%, of a total number of expected bits, such that more than 75%, specifically more than 90%, in particular more than 95%, of the expected bits of the expected bitstring B' are equal to a corresponding fraction of the measured bits of the first bitstring B. The predefined maximum amount of deviations may be derived using a security analysis. Although the security of the disclosed method - if implemented under ideal conditions - is guaranteed by the laws of quantum mechanics, certain effects may be taken into account in a practical realization. Due to imperfections of devices (inaccurate state preparation, losses in quantum channels, detection efficiency less than unity, production inaccuracies, misalignments, miscalibrations), some quantum states may divert from their classical descriptions, get lost during transmission, or may yield an unreasonable measurement result. This is why up to a predefined amount of deviations (i.e., lost bits and/or unreasonable bits) may be accepted. In turn, a malicious third party may try to exploit this adaption to authenticate a digital transaction. The predefined maximum amount may be a sum of a maximum of losses of bits and a maximum of unreasonable measurement results. The predefined maximum amount of deviations may be stated in terms of a rate, i.e., a maximum allowable relative percentage of deviations. For example, semidefinite programming might be used to identify rates for which an attack can be detected. As an example, 50% of deviations may be accepted. A malicious sender would in theory be able to measure half of the quantum token **|*P*〉** according to a first sequence corresponding to the receiver and the other half of the quantum token **|*P*〉** according to another first sequence corresponding to another receiver, thus effectively creating two measured bitstrings.

For example, the quantum states of the quantum token **|*P*〉** may be encoded onto a photonic degree of freedom of single photons (i.e. the qubit is implemented as a photonic degree of freedom of a single photon), whereas the measurement operators of the set of predefined measurement operators correspond to predefined measurements applicable on the photons. For example, the qubits may relate to a polarization of the photon. A photonic degree of freedom may be a polarization, or a phase of a single photon, or relating to a timing of a single photon ("time encoding"). A corresponding measurement operator may be, for example, realized by a polarizing beam-splitter and two photon detectors, whereas the polarising beam-splitter directs photons onto the two detectors.

As an idealized and simplified example, the polarizer may absorb photons with a first polarization with an efficiency of 100%, whereas photons with a second polarization orthogonal to the first polarization may be guided onto the photon detector with an efficiency of 100%. The photon detector may have a detection efficiency of 100%. Therefore, the photon detector would yield a signal in case a photon comprising the second polarization is measured and would yield no signal in case a photon comprising the first polarization is measured.

Optionally, the method may comprise the further steps before receiving the generated first bitstring B and the receiver token M by the provider:
- providing the generated first bitstring B to the receiver;
- forwarding the received first bitstring B and the receiver token M to the provider by the receiver. The first bitstring B may also be forwarded to the provider by the receiver. The receiver may trigger the digital transaction by forwarding the received first bitstring B and the receiver token M to the provider.

The disclosure further concerns a provider comprising means for preparing a quantum token **|*P*〉** as a series of quantum states and for transmitting the quantum token **|*P*〉** to a sender, and a first data processing apparatus comprising means for carrying out the steps:
- storing a secret sender token C and a classical description of the quantum token **|*P*〉;**
- receiving a first bitstring B and a receiver token, whereas the receiver token M is associated with a receiver;
- computing a second sequence of measurement operators, whereas the second sequence is an output of a predefined function f(C,M) of the secret token C and the received receiver token M, whereas the second sequence of measurement operators is based on a set of predefined measurement operators;
- determining an expected bitstring B' of expected bits based on the computed second sequence of measurement operators and the stored classical description of the quantum token **|*P*〉;**
- responsive to verifying that the expected bits of the expected bitstring B' agree to corresponding measured bits of the first bitstring B except for up to a predefined maximum amount of deviations, confirming the digital transaction by the provider.

The first data processing apparatus may for example be a computer or a smartphone. Means for preparing a quantum token **|*P*〉** as a series of quantum states and for transmitting the quantum token **|*P*〉** to a sender may for example include means to generate entangled photons and to transmit one of the entangled photons to the sender. For example, spontaneous parametric down conversion may be used to generate entangled photons. For example, an optical fiber may be used to transmit photons.

Furthermore, the disclosure concerns a sender comprising second means for receiving a quantum token **|*P*〉** from a provider and for measuring the quantum token **|*P*〉** according to a first sequence of measurement operators and a second data processing apparatus comprising means for carrying out the steps:
- storing a secret sender token C, whereas the sender token C is associated with the sender;
- calculating the first sequence of measurement operators, whereas the first sequence is an output of a predefined function f(C,M) of the secret token C and a public receiver token M, whereas the receiver token is associated with a receiver, whereas the first sequence of measurement operators is based on a set of predefined measurement operators;
- generating a first bitstring B by measuring a received quantum token **|*P*〉** according to the calculated sequence of measurement operators, whereas the first bitstring B comprises measured bits.

The second data processing apparatus may be a computer or a smartphone, for example. The second means for receiving a quantum token **|*P*〉** from the provider and for measuring the quantum token **|*P*〉** according to a first sequence of measurement operators may comprise, for example, optical components, such as mirrors, polarizers, optical fibers and/or optical detectors in case the quantum token **|*P*〉** comprises photons.

By way of example, the disclosure is further explained with respect to some selected embodiments shown in the drawings. However, these embodiments shall not be considered limiting for the disclosure.
Fig. 1 schematically shows a sequence diagram of a classical scheme for authorizing a digital transaction of a digital asset with a sender, a provider and a receiver.
Fig. 2 schematically shows a sequence diagram of the quantum-digital authorization method for authorizing a digital transaction with a sender and a provider.
Fig. 3 schematically shows the provider and the sender of fig. 2

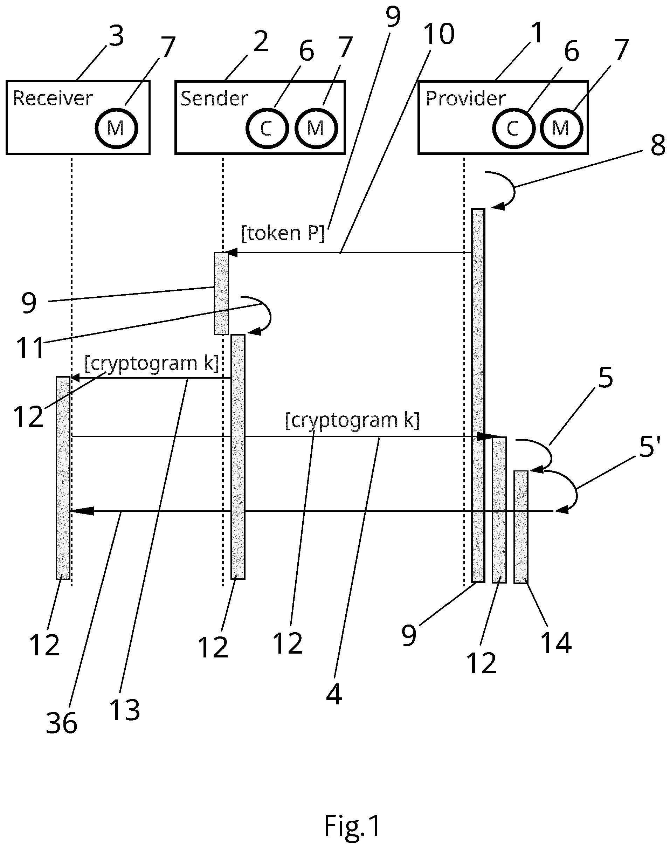

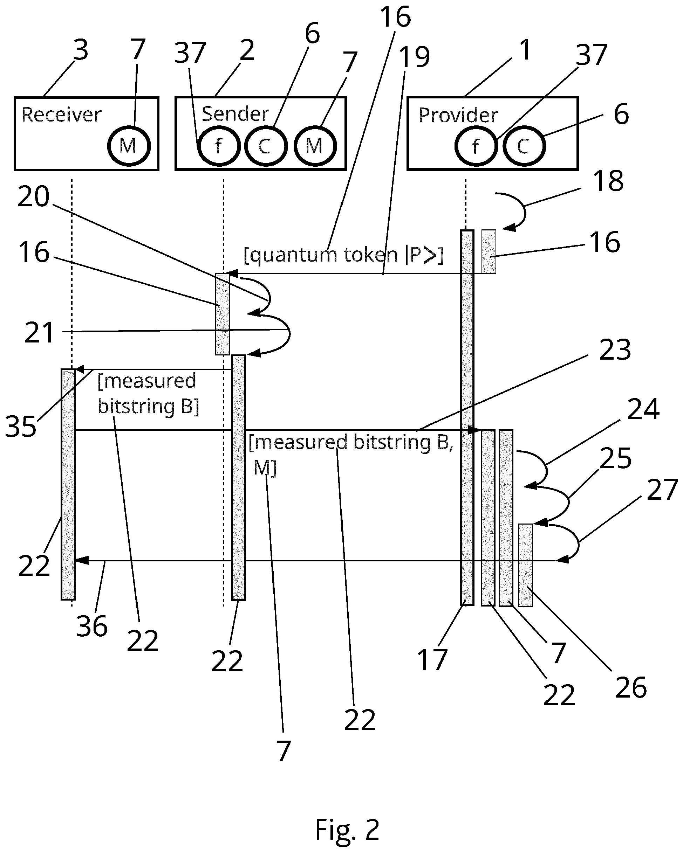

Fig. 1 schematically shows a sequence diagram of a classical (digital) scheme for authorizing a digital transaction. The scheme involves a provider 1, in this example a bank, a sender 2, in this example a natural person, and a receiver 3, in this example a merchant. The sequence diagrams in Fig. 1 and 2 loosely follow the specification of the respective behavioral diagram type according to the Unified Modeling Language. In the sequence diagrams, time progresses from the top to the bottom. Bars indicate that a particular information or object is held, or is at least accessible, by one of the provider 1, the sender 2 and the receiver 3. Bars on or next to the respective vertical dashed line (the "lifeline") of the provider 1, the sender 2 or the receiver 3 belong to or are associated with this respective party. The objects indicated by circles next to the provider 1, the sender 2 and the receiver 3 are held or are at least accessible by the respective party regardless of the steps of the sequence diagram.

The sender 2 intends to purchase goods from the receiver 3 and intends to pay by means of a digital transaction. Both the provider 1 and the sender 2 have access to a secret token C 6 associated with the sender 2. A public merchant token M 7 is publicly known and therefore accessible by all involved parties. The secret token C 6 and the public merchant token M 7 are 256 bit random numbers. The sender 2 has informed the provider 1 of their intention to authorize the digital transaction, however without disclosing (or needing to disclose) the receiver of the transaction to the provider. Consequently, the provider 1 generates 8 a one-time token P 9, which is a 256 bit random number. The provider transmits 10 the token P to the sender 2. The transmission is done via a classical digital channel and thus may be intercepted in principle. The sender 2 proceeds to calculate 11 a cryptogram k 12, which is a function k(C,M,P) of the secret token C 6, the public merchant token M 7 and the one-time token P 9. The function in this example is a hash-function. In order to authorize the digital transaction, the sender 2 sends 13 the cryptogram k 12 to the receiver 3. The receiver 3 receives the cryptogram k 12 and forwards 4 the cryptogram k 12 to the provider 1. Optionally, the receiver 3 could forward the public merchant token M 7 in addition to the cryptogram 12 to the provider 1. Optionally, the receiver 3 may request a verification of the digital transaction from the provider 1. The digital transaction is in this exemplary embodiment a digital transfer of money to the receiver 3, whereas the money is owned by the sender 2 and stored by the provider 1. The provider 1 has access to the secret token C 6, the public merchant token M 7 and the one-time token P 9 and knows the function k(C,M,P), thus the provider calculates 5 a second cryptogram k' 14. The provider 1 then compares 5' the cryptogram k 12 to the second cryptogram k' 14. Responsive to determining that the cryptogram k 12 is equal to the second cryptogram k' 14, the provider 1 confirms the digital transaction and e.g. sends 36 a confirmation to the receiver 3.

The same reference signs are used for corresponding elements throughout the description.

Fig. 2 schematically shows a sequence diagram of the quantum-digital authorization method for authorizing a digital transaction. The method also involves the provider 1, the sender 2 and the receiver 3. The sender 2 and the provider 1 have the secret token C 6 associated with the sender 2. The sender 2 furthermore has access the public receiver token M 7. The provider 1 may or may not have access to and/or knowledge of the receiver token M 7 in this case. The sender 2 has informed the provider of their intention to authorize a digital transaction. In this example, the digital transaction is the digital transfer of one Euro to the receiver.

In a first step, the provider 1 prepares 18 a quantum token **|*P*〉** 16, whereas the quantum token **|*P*〉** 16 comprises a series of quantum states encoded onto qubits (not shown), whereas the provider 1 stores a classical description 17 of the prepared quantum token **|*P*〉** 16. The quantum states of the quantum token **|*P*〉** 16 are encoded onto a photonic degree of freedom of single photons. In this exemplary embodiment, the quantum states are encoded in terms of a polarization of single photons.

The provider 1 then transmits 19 the quantum token **|*P*〉** 16 from the provider 1 to the sender 2. The sender 2 then calculates 20 a first sequence of measurement operators, whereas the first sequence is an output of a predefined function f(C,M) 37 of the secret token C 6 and the public receiver token M 7, whereas the receiver token M 7 is associated with the receiver 3. The predefined function f(C,M) 37 is an information-theoretically secure cryptographic function of the secret token C 6 and the public receiver token M 7. Specifically, the predefined function f(C,M) 37 is a hash-based message authentication code (HMAC) using C as secret key and M as message to be authenticated. The provider 1 and the sender 2 have agreed upon the (same) predefined function f(C,M) 37 previously.

The first sequence of measurement operators is based on a set of predefined measurement operators. In this example, the quantum states are encoded onto photonic degrees of freedoms of single photons in terms of their polarization. Therefore, the predefined measurement operators correspond to predefined measurements applicable on the photons, in specific, the predefined measurements relate to the polarization of the photons.

The sender 2 is then generating 21 a first bitstring B 22 of measured bits by measuring the received quantum token |*P*〉 16 according to the calculated first sequence of measurement operators. The sender 2 then provides 35 the generated first bitstring B 22 to the receiver 3. The first bitstring B 22 acts approximately as a check, i.e., as a (digital) object that orders the provider 1 to do the digital transaction. In this embodiment, the digital transaction is the digital transfer of one Euro from an account of the sender 2 to an account of the receiver 3. Due to the merchant token M 7, the first bitstring B 22 has been issued in the name of the receiver 3. The receiver 3 then forwards the first bitstring B 22 and the receiver token M 7 to the provider 1, such that the provider 1 is receiving 23 the generated first bitstring B 22 and the receiver token M 7. The receiver 3 therefore can trigger the digital transaction by forwarding the first bitstring B 22 and the receiver token M 7 to the provider 1 and can choose to do so at any time after receiving the first bitstring 22 from the sender 2. Alternatively, the sender 2 may directly send the generated first bitstring B 22 and the receiver token M 7 to the provider 1.

The provider 1 then computes 24 a second sequence of measurement operators, whereas the second sequence is an output of the predefined function f(C,M) 37 of the secret token C 6 and the received receiver token M 7. The second sequence of measurement operators is based on the set of predefined measurement operators. The provider 1 then determines 25 an expected bitstring B' 26 with expected bits based on the computed second sequence of measurement operators and the stored classical description 17 of the quantum token **|*P*〉** 16.

The provider 1 then checks 27 if the expected bits of the expected bitstring B' 26 agree to corresponding measured bits of the first bitstring B 22 except for up to a predefined maximum amount of deviations. The predefined maximum amount of deviations is 1% of the total number of expected bits of the expected bitstring B' 26 in this exemplary embodiment. Therefore, the predefined maximum amount of deviations is less than 50% of a total number of expected bits, such that more than 50% of the expected bits of the expected bitstring B' 26 are equal to a corresponding fraction of the measured bits of the first bitstring B 22.

Responsive to verifying that the expected bits of the expected bitstring B' 26 agree to the corresponding measured bits of the first bitstring B 22 except for up to a predefined maximum amount of deviations, the provider 1 confirms the digital transaction and e.g. sends 36 a confirmation to the receiver 3. The provider 1 then transfers one Euro from the account of the sender 2 to the account of the receiver 3.

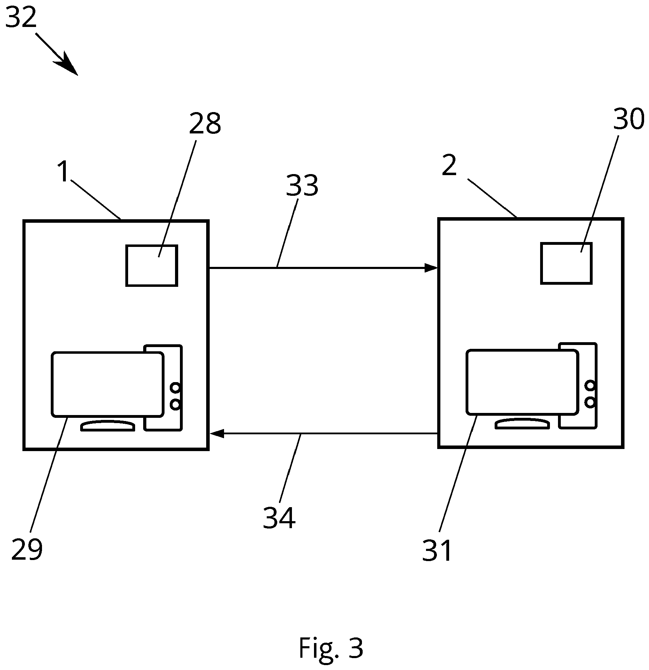

Fig. 3 schematically shows a network 32 comprising the provider 1 and the sender 2 of fig. 2. The provider 1 comprises means 28 for preparing the quantum token **|*P*〉** 16 as a series of quantum states and for transmitting the quantum token **|*P*〉** 16 to the sender 2. Furthermore, the provider 1 comprises a first data processing apparatus 29 comprising means for carrying out the steps:
- storing the secret sender token C 6 and the classical description 17 of the quantum token **|*P*〉** 16;
- receiving the first bitstring B 22 and the receiver token M 7, whereas the receiver token M 7 is associated with the receiver 3 (see fig. 3);
- computing the second sequence of measurement operators, whereas the second sequence is an output of a predefined function f(C,M) 37 of the secret token C 6 and the received receiver token M 7, whereas the second sequence of measurement operators is based on the set of predefined measurement operators;
- determining an expected bitstring B' 26 of expected bits based on the computed second sequence of measurement operators and the stored classical description 17 of the quantum token **|*P*〉** 16;
- responsive to verifying that the expected bits of the expected bitstring B' 26 agree to corresponding measured bits of the first bitstring B 22 except for up to a predefined maximum amount of deviations, confirming the digital transaction.

The sender 2 comprises second means 30 for receiving the quantum token **|*P*〉** 16 from the provider 1 and for measuring the quantum token **|*P*〉** 16 according to the first sequence of measurement operators and a second data processing apparatus 31 comprising means for carrying out the steps:
- storing the secret sender token C 6, whereas the sender token C 6 is associated with the sender 2;
- calculating the first sequence of measurement operators, whereas the first sequence is an output of a predefined function f(C,M) 37 of the secret token C 6 and the public receiver token M 7, whereas the receiver token M 7 is associated with the receiver 3 (see fig. 2), whereas the first sequence of measurement operators is based on a set of predefined measurement operators;
- generating the first bitstring B 22 by measuring the received quantum token **|*P*〉** 16 according to the calculated sequence of measurement operators, whereas the first bitstring B 22 comprises measured bits.

The network 32 comprises a quantum channel 33, which is used to transmit the quantum token **|*P*〉** 16 from the provider 1 to the sender 2. In this exemplary embodiment, the quantum token **|*P*〉** 16 comprises photons. The quantum channel 33 is configured to guide the photons from the provider 1 to the sender 2. The quantum channel 33 comprises a single mode fiber. Furthermore, the network comprises a classical channel 34, which is used by the provider for receiving the generated first bitstring B 22 and the receiver token M 7. The classical channel 34 is a digital channelin this example. The classical channel 34 comprises an electric cable. Alternatively, the classical channel may comprise a wireless connection of the provider 1 with, for example, the sender 2.

The means 28 for preparing the quantum token **|*P*〉** 16 as a series of quantum states and for transmitting the quantum token **|*P*〉** 16 to the sender comprises a quantum-optical laboratory. Alternatively or additionally, the means 28 for preparing the quantum token **|*P*〉** 16 as a series of qubits and for transmitting the quantum token **|*P*〉** 16 to the sender may comprise an integrated chip, such as an integrated photonic chip with an photonic integrated circuit. The integrated chip may be mobile and/or portable. The second means 30 for receiving the quantum token **|*P*〉** 16 from the provider 1 and for measuring the quantum token **|*P*〉** 16 according to the first sequence of measurement operators comprise another quantum-optical laboratory.

In the first step, the provider 1 generates a random bitstring b and a random conjugate basis-string A of length λ. Each bit bⱼ is encoded onto a quantum state prepared in Bⱼ, whereas j a positive integer and an index. This constitutes the classical description 17 (bⱼ, Aⱼ)^{λ} of the quantum token **|*P*〉** 16, which the provider 1 stores with an identifier of the sender 2. The length λ may influence the success probability of an attack, a greater length λ yields an increased security.

In this exemplary embodiment, the provider 1 employs in the quantum-optical laboratory a spontaneous parametric down conversion (SPDC) source, to create a pair of polarization-entangled photons in the state |Ψ-〉 = (|HV ) - |V H〉)/√2.

A double SPDC process in a periodically poled potassium titanyl phosphate (ppKTP) crystal is pumped with a continuous-wave 515 nm laser, yielding a pair of polarization-entangled and color-entangled photons. One photon is emitted at around 1500 nm, while its orthogonally polarized counterpart is emitted at around 785 nm. Since the spectral bandwidths of the two SPDC processes are not equal, a tunable bandpass filter is inserted in a 1500 nm arm to equalize the two SPDC processes and enhance the entanglement visibility. In order to render the two photons temporally indistinguishable, an unpoled KTP (Potassium titanyl phosphate) crystal of half the length of the ppKTP crystal, with axes rotated by 90° with respect to the ppKTP axes, is inserted. The provider 1 keeps the 785 nm photon of the pair of polarization-entangled photons in the state |Ψ-〉 = (|HV ) - |V H))/V2 and employs a 50/50 beam-splitter to probabilistically direct it to one of two polarization projection stages, measuring its polarization in either a linear H/V or a diagonal D/A basis. This creates a random classical description (bⱼ, Bⱼ)^{λ} and remotely encodes a qubit of the quantum token **|*P*〉** 16 onto the second photon. The 785 nm photons are locally detected in the quantum optical laboratory of the provider 1 using avalanche single-photon detectors, with efficiencies of around 50%.

The quantum token **|*P*〉** 16, i.e. the 1500 nm photons of the pair of polarization-entangled photons, is transmitted to the sender 2, who is located in another building as the provider 1, through the quantum channel 33, which is a single mode fiber with a length of 641 meters. Upon receiving the quantum token **|*P*〉** 16, the sender 2 calculates the first bitstring mᵢ = HMAC(C, M), which is the output of an information-theoretically secure cryptographic function (HMAC), which is the predefined function f(C,M) 37. i is a positive integer and an index number. HMAC takes the secret token C 6 as key and the receivers token M 7 as message as input. The sender 2 interprets mᵢ as a basis-string and privately measures the sequence of quantum states of the quantum token **|*P*〉** 16 according to mᵢ. The 1500 nm photons of the quantum token **|*P*〉** 16 are detected with superconducting nanowire single-photon detectors by the sender 2, with efficiencies around 93%. The resulting string of measurement outcomes kᵢ constitutes the cryptogram, i.e., the first bitstring B 22.

The sender 2 provides the first bitstring B 22 (in this example kᵢ) and M 7 to the receiver 3. The receiver 3 then forwards the first bitstring B 22 and the receiver token M 7 to the provider 1. To authorize the digital transaction, the provider 1 looks up C 6 and the classical description 17, in this case (bⱼ, Aⱼ)^{λ}, and calculates the second sequence of measurement operators mᵢ by mᵢ = HMAC(C, M). The provider 1 accepts and confirms the digital transaction if (kᵢ)ⱼ = bⱼ when (mᵢ)ⱼ = Aⱼ except for up to a predefined maximum amount of deviations. The provider 1 rejects the digital transaction otherwise.

The providers 1 and senders 2 single-photon detectors are connected to two different Time-Tagging Modules (TTM). In order to recover coincidences between the sender 2 and the provider 1, i.e., their respective quantum optical laboratories, synchronization of the two TTMs is required: first, the internal clocks of the respective TTMs bear an offset with respect to one another, due to the photon travel time through the optical fiber link. Second, the cycles of the internal clocks of the two TTMs drift with slightly different rates, resulting in an offset drift over time. Finally, there is an electronic delay due to different detector response times, and the TTMs only record time tags relative to the time they were activated. All these factors are corrected with a post-processing code.

The post-processing code is described in detail in the PhD thesis of Marie-Christine Röhsner (University of Vienna, Walther Group, 2020): M.-C. Röhsner, "Experimental implementation of probabilistic one-time programs using quantum states," 2020*.*

To measure a heralded second order correlation function, the 1500 nm photons created by the SPDC source are sent directly to an In-GaAs detector, while the 758 nm photons are routed to a 50/50 fiber beam-splitter, with both outputs connected to one detector each. The heralded second order correlation function may be used to account for attacks based on multi-photon emission.

As an example, the following conventions are used:
Nonbinary numbers are converted to binary numbers according to the following: "0" nonbinary) equals "00" (binary), "1"
(nonbinary) equals "01" (binary), and "2" (nonbinary) equals "10" (binary).

There are two measurement bases, namely "H/V" and "D/A". Each basis is associated with a binary number. "H/V" is assigned to binary "0" and "D/A" is assigned to binary "1".

The measurement operators used constitute a measurement either in the "H/V" basis or the "D/A" basis, which constitutes the set of predefined measurement operators. The "H/V" and the "D/A" basis are non-orthogonal in this example and have been agreed upon previously by the sender 2 and the provider 1. "H/V" is a linear basis, whereas "D/A" is also linear and diagonal to the "H/V" basis. Both bases relate to a polarization of photons. The predefined set of measurement operators consists of the operators "H/V" and "D/A". For example, the "H/V" operator is realized by a polarizing beam splitter, which splits incoming photons according to their polarization in the H/V basis in two outputs. Each output comprises a photon detector. For example, if a photon polarized in "V" direction is measured by means of the H/V operator, the photon is guided towards the photon detector associated with a "V" output of the HV/measurement operator. The measurement result is then "1" as the photon detector associated with the H direction does not detect a photon but the other photon detector does.

For example, the predefined function f(C,M) 37 of the secret token C 6 and the public receiver token M 7 is defined as follows: f(C,M) = (C1 M + C2 ) mod 3, whereas C = ( C1 , C2 ) and C1, C2 are each an element of [0,2]. M is an element of [0,2]. The sender 2 is assigned the secret token C = (2, 1) in this example and intends to authorize a digital transaction with the receiver 3. The receiver 3 is associated with the receiver token M 7 of M = 2.

The quantum token **|*P*〉** 16 is prepared by the provider 1 as |P〉= |V〉|D〉|A〉|H〉|A〉|V〉, in this exemplary embodiment. Note that |P〉= |V〉|D〉|A〉|H〉|A〉|V〉 is the classical description of the quantum token. Whereas "|D)" and "|A〉", as well as "|H)" and "|V〉" are quantum states in the "D/A" and the "H/V" basis respectively. "|D〉" and "|A〉" are orthogonal. "|H〉" and "|V〉" are also orthogonal to each other. For example, the state is defined as IV) = 1*|V〉 + 0*|H〉.

The sender 2 calculates a first sequence of measurement operators This leads to the sequence of measurement operators: f(C,M ) = (2*2+1) mod 3 = 2 (nonbinary). This equals to binary "10". Since the quantum token **|*P*〉** 16 comprises six quantum states, the first sequence of measurement operators should have a length of six. Binary "10" is therefore interpreted such that the first half of the quantum token **|*P*〉** 16 is to be measured with the operator "D/A" and the second half is to be measured with the operator "H/V". Alternatively, any other interpretation could be used, as long as both the sender 2 and the provider 1 agree on the same interpretation. The following first sequence of measurement operators results: "D/A; D/A; D/A; H/V; H/V; H/V". Note that e.g. C = (1,0) and M = 2 leads to the same sequence of measurement operators: f(C,M ) = (1*2+0) mod 3 = 2. Thus, the predefined function f(C,M) 37 conceals the secret token C 6 even if the receiver token M 7 is public. The sender 2 then generates the first bitstring B 22 of measured bits by measuring the received quantum token **|*P*〉** 16 according to the calculated first sequence of measurement operators. Measuring the first three quantum states of the quantum token **|*P*〉** in the basis "D/A", and the last three quantum states in the basis "H/V" by the sender yields the measured first bitstring B = (0 0 1 0 1 1).

Upon receiving the measured first bitstring B 22 and the receiver token M 7 from the sender, the provider 1 computes a second sequence of measurement operators, whereas the second sequence is an output of the predefined function f(C,M) 37 of the secret token C 6 and the received receiver token M 7. The second sequence of measurement operators is based on the set of predefined measurement operators "D/A" and "H/V".

Consequently, the provider 1 determines an expected bitstring B' 26 with expected bits based on the computed second sequence of measurement operators and the stored classical description of the quantum token **|*P*〉** 16. The expected bitstring B' 26 is in this example as follows: B' = (; 0 1 0 ; 1), whereas ';' denotes positions of measured bits that were measured in the basis different from the one the quantum state was prepared in, and are omitted from the expected bitstring B' 26 for the following comparison. The expected bits are denoted by "1" and "0" in this example. In another notation, with position labels starting with 1 as the first position, the expected bitstring B' 26 may be written as B' = (2:0, 3:1, 4:0, 6:1). As is more obvious from this notation, the length of the expected bitstring B' 26, that is, the number of expected bits, is four (in both cases).

The provider 1 compares the expected bits of the expected bitstring B' 26 to the respective bits of the measured first bitstring B 22 and disregards the measured bits at the positions marked by ";" in the first notation of the expected bitstring B' 26 above.

The comparison of B' = (; 0 1 0 ; 1) and B = (0 0 1 0 1 1) yields: (-, correct, correct, correct, -, correct). Whereas "-" denotes measured bits that were excluded from the comparison, "correct" means that the respective measured bit of the first bitstring B 22 is equal to the respective expected bit of the expected bitstring B' 26. "incorrect" would denote a deviation. In this case 100% of the compared (corresponding) bits agree. The predefined maximum amount of deviations is one in this example. There are zero deviations, which is less than one. Responsive to verifying that the expected bits of the expected bitstring B' 26 agree to corresponding measured bits of the first bitstring B 22 except for up to a predefined maximum amount of deviations, the provider 1 confirms the digital transaction.

## Claims

1. Quantum-digital authorization method for authorizing a digital transaction with a sender (2) and a provider (1), whereas the sender (2) and the provider (1) have a secret token C (6) associated with the sender (2), comprising the steps:
- preparing a quantum token **|*P*〉** (16) by the provider (1), whereas the quantum token **|*P*〉** (16) comprises a series of quantum states encoded onto qubits, whereas the provider (1) stores a classical description (17) of the prepared quantum token **|*P*〉** (16) ;
- transmitting the quantum token **|*P*〉** (16) from the provider (1) to the sender (2);
- calculating a first sequence of measurement operators by the sender (2), whereas the first sequence is an output of a predefined function f(C,M) (37) of the secret token C (6) and a public receiver token M (7), whereas the receiver token M (7) is associated with the receiver (3), whereas the first sequence of measurement operators is based on a set of predefined measurement operators;
- generating a first bitstring B (22) of measured bits by measuring the received quantum token **|*P*〉** (16) according to the calculated first sequence of measurement operators by the sender;
- receiving the generated first bitstring B (22) and the receiver token M (7) by the provider (1);
- computing a second sequence of measurement operators by the provider (1), whereas the second sequence is an output of the predefined function f(C,M) (37) of the secret token C (6) and the received receiver token M (7), whereas the second sequence of measurement operators is based on the set of predefined measurement operators;
- determining an expected bitstring B' (26) with expected bits based on the computed second sequence of measurement operators and the stored classical description of the quantum token **|*P*〉** (16);
- responsive to verifying that the expected bits of the expected bitstring B' (26) agree to corresponding measured bits of the first bitstring B (22) except for up to a predefined maximum amount of deviations, confirming the digital transaction by the provider (1).

2. Quantum-digital authorization method according to claim 1, **characterized in that** the predefined function f(C,M) (37) is an information-theoretically secure cryptographic function of the secret token C (6) and the public receiver token M (7).

3. Quantum-digital authorization method according to claim 1 or 2, **characterized in that** the predefined maximum amount of deviations is less than 50% of a total number of expected bits, such that more than 50% of the expected bits of the expected bitstring B' (26) are equal to a corresponding fraction of the measured bits of the first bitstring B (22).

4. Quantum-digital authorization method according to any one of the previous claims, **characterized in that** the quantum states of the quantum token **|*P*〉** (16) are encoded onto a photonic degree of freedom of single photons, whereas the set of predefined measurement operators correspond to predefined measurements applicable on the photons.

5. Quantum-digital authorization method according to any one of the previous claims, **characterized by** the further steps before receiving the generated first bitstring B (22) and the receiver token M (7) by the provider (1):
- providing the generated first bitstring B (22) to the receiver (3);
- forwarding the received first bitstring B (22) and the receiver token M (7) to the provider (1) by the receiver (3);

6. A provider (1) comprising means (28) for preparing a quantum token **|*P*〉** (16) as a series of quantum states and for transmitting the quantum token **|*P*〉** (16) to a sender (2), and a first data processing apparatus (29) comprising means for carrying out the steps:
- storing a secret sender token C (6) and a classical description (17) of the quantum token **|*P*〉** (16);
- receiving a first bitstring B (22) and a receiver token M (7), whereas the receiver token M (7) is associated with a receiver (3);
- computing a second sequence of measurement operators, whereas the second sequence is an output of a predefined function f(C,M) (37) of the secret token C (6) and the received receiver token M (7), whereas the second sequence of measurement operators is based on a set of predefined measurement operators;
- determining an expected bitstring B' (26) of expected bits based on the computed second sequence of measurement operators and the stored classical description (17) of the quantum token **|*P*〉** (16);
- responsive to verifying that the expected bits of the expected bitstring B' (26) agree to corresponding measured bits of the first bitstring B (22) except for up to a predefined maximum amount of deviations, confirming the digital transaction.

7. A sender (2) comprising second means (30) for receiving a quantum token **|*P*〉** (16) from a provider (1) and for measuring the quantum token **|*P*〉** (16) according to a first sequence of measurement operators and a second data processing apparatus (31) comprising means for carrying out the steps:
- storing a secret sender token C (6), whereas the sender token C (6) is associated with the sender (2);
- calculating the first sequence of measurement operators, whereas the first sequence is an output of a predefined function f(C,M) (37) of the secret token C (6) and a public receiver token M (7), whereas the receiver token M (7) is associated with a receiver (3), whereas the first sequence of measurement operators is based on a set of predefined measurement operators;
- generating a first bitstring B (22) by measuring a received quantum token **|*P*〉** (16) according to the calculated sequence of measurement operators, whereas the first bitstring B (11) comprises measured bits.
